# EUROPEAN PATENT APPLICATION

(11) **EP 1 503 316 A1**
(43) Date of publication of application: **02.02.2005**
(21) Application number: 04017902.0
(22) Date of filing: 28.07.2004
(51) Int. Cl.: G06F 17/60

(54) **Fuel consumption economy credits method**

(30) Priority: 30.07.2003 US 630025
(71) Applicant: ETHYL PETROLEUM ADDITIVES, INC., Richmond, Virginia 23219-4304 (US)
(72) Inventor: Aradi, Allen A., Richmond, VA 23233 (US); Davidson, Robert I., Midlothian, VA 23113 (US); Pettigrew, F. Alexander, Chesterfield, VA 23838 (US); Schwab, Scott D., Richmond, VA 23233 (US); Yondola, Robert A., Glen Allen, VA 23059 (US)
(74) Representative: Schüssler, Andrea, Dr.

(57) **Abstract**

Powered platforms for various kinds are each characterized by a corresponding measure of fuel economy. Fuel economy credits are provided to a party who contributes a material that effects an improvement in such fuel consumption for a given powered platform. In a preferred embodiment, such fuel economy credits can be traded. When acquired from another party, such credits can be used to offset fuel economy performance shortfalls. The "material" can comprise any of a wide variety of substances, components, assemblies, design specifications, control strategies (including enabling software), and so forth. The powered platforms can include stationary powered platforms or mobile powered platforms.

## Description

### Technical Field

This invention relates generally to inducements and more particularly to inducements that lead to improved fuel consumption characteristics for power platforms of various types.

### Background

Powered platforms of various kinds are known in the art and include both stationary powered platforms (such as, for example, power generation stations, incinerators, and the like) and mobile powered platforms (such as, for example, terrestrial vehicles, water-borne vehicles, and air-borne vehicles). Such powered platforms typically consume one or more kinds of fuel (including but not limited to gasoline, diesel fuel, natural gas, liquefied propane gas, hydrogen, coal, oil, kerosene, and other combustible materials as well as nuclear fuels, electricity, and so forth) to create their corresponding output power. For example, a typical automobile engine consumes gasoline to create motive energy and a power generation turbine may consume natural gas to effect the generation of electricity.

Unfortunately, such powered platforms are unable to extract all available energy from their respective fuels. Instead, each powered platform will have a corresponding characteristic economy that corresponds to their relative consumption of fuel material, which characteristic economy will typically leave considerable room for improvement. To put it another way, being inherently inefficient, the conversion of one form of energy into another form of energy always leaves room for incremental improvement.

As a general principle, policy makers tend to agree that improving the fuel consumption efficiency of various powered platforms (and especially powered platforms that consume a significant quantity of fuel, either alone or in the aggregate) comprises a worthy and desired goal. As one example, it is generally agreed that increasing the efficiency by which the average automobile utilizes gasoline will tend, in turn, to reduce the amount of gasoline that must be made available over a given period of time. This, in turn, can provide a number of potential benefits to various parties including extending the viability of a powered platform that presently depends upon a resource having ultimately limited availability.

Policy makers, both governmental and non-governmental, have tried various strategies to induce the design, manufacture, and/or usage of powered platforms that represent an improvement with respect to fuel utilization as compared to contemporary platforms. As one example, some governmental bodies have sought to mandate, through the passage of corresponding laws, that automobile manufacturers provide vehicles that meet particular miles-per-gallon fuel economy performance targets. As another example, at least one governmental body imposes additional licensing fees on consumers who purchase an automobile that consumes fuel at a rate that exceeds a specified maximum value.

Fuel economy is a highly desired feature in vehicular transportation. Automobile and truck manufacturers spend millions of dollars to achieve even small percentages of fuel economy improvement. State and federal regulations have also begun to address the public health and economic advantages of achieving improved vehicular fuel economy. Toward this end, original equipment manufacturers ("OEMs") such as the automakers are constantly striving to design vehicles that are more aerodynamic, lighter in weight, have cleaner combusting engines, and have more efficient engines. OEMs are eager to achieve a 0.2 percent increase in fuel economy in their vehicles.

The major fuel-related deposit problem areas for port fuel injected (PFI) and direct injection gasoline (DIG) engines are injectors, intake valves, and the combustion chamber. Additionally, engine friction between piston and cylinder, the valve train, and the fuel pump result in increasing fuel consumption. In DIG engine technology in particular there is a friction-related durability issue with the high-pressure pump (up to 1500 psi pumping capacity), which break down due to the inherently low lubricity of gasolines. There is, therefore, a desire in the petroleum industry to produce a fuel suitable for use in both PFI and DIG engines, that can address the engine deposit and frictional requirements outlined above.

Fuel companies are also seeking to produce better fuels that can impart improved fuel economy to the consumer. These fuels, both gasoline and diesel, are being formulated at the refineries to exhibit better combustion properties, improved driveability, lower emissions, lower sulfur content, and lower phosphorus content.

Oil and lubricant companies are also interested in producing improved fuel economy in vehicles by means of, for example, reducing friction in lubricating oils. These advantages can be pursued in, for example, engine oils, automatic and manual transmission fluids, and gear or hydraulic oils.

Fuel and oil companies have turned to the fuel and oil additives suppliers to provide fuel and lubricant additives packages that when put into the fuel and lubricating oils will further improve the fuel economy of the vehicle. A friction modifier may be added to the gasoline as the lone additive or in combination with a detergent dispersant package that is fully formulated for fuel compatibility at conditions likely to be experienced by the engine. In addition, a need exists for a detergent/friction modifier additive concentrate for gasoline that provides all of fuel economy enhancement, deposit control and friction reduction. (See SAE Technical Paper 972900, "Fuel Economy and Power Benefits of Cetane-Improved Fuels in Heavy-Duty Diesel Engines," Green et al., October 13, 1997, incorporated herein by reference in its entirety.)

Therefore, what is needed is a means for the desired fuel economy benefits to be identified, quantified, accorded a credit, whereby such credits can be commercialized, including selling or trading for value.

Though such programs have met with some success, many observers argue that the improvements to date are insufficient. At the same time, many observers also argue that specific technologies exist today that can be used in a present state of availability (or with less than an onerous amount of additional implementational resources) that will yield movement towards the desired levels of efficiency. This, in turn, suggests that insufficient incentives exist to induce the adoption of such existing technologies. In a similar fashion, one can also observe that insufficient incentives exist to induce the development of new technologies that might further improve the overall fuel consumption efficiencies of various powered platforms.

### Brief Description of the Drawings

The above needs are at least partially met through provision of the powered platform fuel consumption economy credits method described in the following detailed description, particularly when studied in conjunction with the drawings, wherein:
FIG. 1 comprises a block diagram as configured in accordance with the prior art;
FIG. 2 comprises a flow diagram as configured in accordance with various embodiments of the invention; and
FIG. 3 comprises a block diagram as configured in accordance with various embodiments of the invention.
Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. Also, common but well-understood elements that are useful or necessary in a commercially feasible embodiment are typically not depicted in order to facilitate a less obstructed view of these various embodiments of the present invention.

### Detailed Description

Generally speaking, pursuant to these various embodiments, a first party that provides a powered platform (wherein operation of the powered platform requires consumption of at least a first fuel), wherein the powered platform has a characteristic economy that corresponds to consumption of the first fuel, is provided with a material that, when utilized or otherwise rendered effective during operation of the powered platform improves the characteristic economy of the powered platform as corresponds to consumption of the first fuel. A fuel economy credit is then provided as corresponds to this improvement.

The powered platform can comprise essentially any stationary or mobile powered platform. In a similar manner; the first fuel can comprise any of a wide variety of liquid, solid, and gaseous fuels or other energy sources.

Depending upon the embodiment, the material can be provided internally, by the first party themselves, or can be provided from an external source, such as a second party. In a similar fashion, depending upon the embodiment, the fuel economy credit can be provided in whole or in part to the first party and/or to such other additional parties as may have been a part of providing, manufacturing, or designing the provided material.

Also depending upon the embodiment, the material can assume any of a wide variety of physical forms. As one example, the material can be an additive such as, but not limited to, a motor train lubricant which, when added to a given powered platform, improves the fuel consumption efficiency of the latter (for example, by effectively reducing loading on the powered platform during usage). As another example, the material can be embodied as a reconfiguration of a given powered platform. For example, an additional mechanism can be added to an existing powered platform (or the existing powered platform can be redesigned to integrally include the new mechanism or concept) that results in improved fuel consumption performance. As yet another example, the material can comprise operational controls (including, for example, software instructions) that, when implemented, effect improved fuel consumption performance for a corresponding powered platform. Numerous other possibilities exist as well as will be illustrated below.

In a preferred embodiment, the fuel economy credits have value. In particular, they will preferably be negotiable and otherwise transferable to others. Pursuant to one approach, such credits can be used by a party to meet their regulatory (or other) requirements by, for example, offsetting the effects or performance of their other activities, designs, or behaviors. Though such offsetting permits a given party to behave in part in a non-desired manner (for example, such a party can avoid improving the fuel consumption performance of one of their products by offsetting the performance requirements impact through use of such fuel efficiency credits), the overall effect is nevertheless consistent with the desired goal. The offsetting party must expend resources to obtain the credits, and such costs will likely be reflected in the ultimate price of acquiring or using the powered platform at issue. At the same time, overall economy as measured in the aggregate will tend to improve as this is how the credits are acquired. Furthermore, by attaching transferable and tangible value to such credits, various third parties will likely be induced to seek, in various ways, to utilize existing and/or to devise new improvements that can be offered and implemented in exchange for the award of such credits.

The benefits and advantages of certain embodiments of the present invention can be obtained by the use of low sulfur diesel fuel and low sulfur gasoline. The low sulfur content can be for example an amount equal to or less than about 15 ppm sulfur, and in another embodiment less than about 10 ppm sulfur.

The regeneration of emission control systems usually requires the use of additional fuel. Therefore, a cleaner fuel or a fuel with fuel additives whereby regeneration of the emission control system is reduced, will result in improved fuel economy because less fuel will be combusted.

Fuel having reduced aromatics content, or fuel derived from bio-mass such as biodiesel, and fuel producing reduced particulate trap filtrate, and fuel emulsions and synthetic fuels will all impart improved fuel economy and are included in the method of the present invention.

The benefits and advantages of embodiments of the present invention can also be obtained by the incorporation into a vehicle of one or more fuel and/or lubricating oil components. Thus, for example, fuel detergents, dispersants, or carrier fluids can be incorporated into a gasoline or diesel fuel to help improve the fuel economy by keeping the valves and injectors clean. Cleaner valves and injectors can provide improved fuel economy, measured in terms of reduced fuel consumption and/or increased mileage per gallon of fuel consumed. In an embodiment, HiTEC® 6421 Detergent Additive from Ethyl Corporation can be used to achieve fuel economy. In particular, fuel economy improvements of about 0.24% to about 0.60% can be achieved in an 80-hour VIB gasoline performance test at 45 ptb and 80 ptb.

In diesel fuels, HiTEC® 4110 Diesel Fuel Additive, a succinimide-based additive, can produce fuel economy improvement in vehicles of up to about 8% when used at 90 ptb.

In a similar manner, another embodiment herein provides a method for producing, transferring, and receiving a fuel economy credit as a result of improving the characteristic economy of a fuel, by means of incorporating into the fuel a fuel additive.

Succinimide fuel additives for diesel fuels and Mannich-based fuel additives for gasoline are especially effective herein. Also succinimides are useful in helping achieve and maintain injector cleanliness in gasoline engines.

Fuel detergents useful in the present invention can include but are not limited to Mannich-based detergents such as Ethyl's HiTEC® 6410, polyether amines, polyisobutylene amines, alkyl- or alkylene-substituted succinimides, and others known to those skilled in the art.

Thus, in an embodiment and not as a limitation herein, a fuel additive package which imparts improved fuel economy to a vehicle combusting the fuel and which could therefore be used in the business method claim of the present invention is as follows:

| Fuel Additive | Wt% |
|---|---|
| Mannich detergent | 40 |
| solvent | 30 |
| alkyl alcohol | 3 |
| polyol carrier fluid | 13 |
| polyisobutylene polymer | 13 |
| carboxylic acid in solvent | 0.5 |
| demulsifier | 0.5 |

Friction modifiers can also be used in a fuel formulation to achieve improved fuel economy. Such friction modifiers useful herein to achieve improved fuel economy can include without limitation mixtures of mono, dimer, and trimer carboxylic acids, mono-carboxylic fatty acids, glycerol monooleates, glycerol fatty acid esters, diethanolamines, fatty acid amine salts, hydroxyacetamides, fatty amine alkoxylates, and 1,2 alkyldiols.

In one embodiment, the method of the present invention is achieved by the use in a fuel of a fuel additive composition for a combustion engine fuel, containing (a) a friction modifier comprising branched saturated carboxylic acid salt of an alkylated amine, and (b) a detergent package. In another embodiment, the fuel additive friction modifier as defined herein comprises a mixture of different monoamine salts having different respective fatty acid moieties with different length backbones and variable degrees of branching. In using such friction modifier fuel additives, fuel economy benefits are derived and can be conveyed according to the method of the present invention.

Fuel additives useful in achieving the method of the present invention can also include manganese-containing fuel additive compounds, such as but not limited to methyl cyclopentadienyl manganese tricarbonyl, available from Ethyl Corporation as MMT®. Vehicles and engines (especially diesels and direct injection gasoline) can be equipped with particulate traps to filter and substantially reduce the exhaust emission of particulate matter (PM). Periodically, the trapped material (predominantly elemental carbon and adsorbed hydrocarbons) must be burned off or "regenerated" in order to maintain adequate exhaust flow through the trap and reduce exhaust restriction (engine backpressure) so that the engine will riot stop operating. Any time that an engine is operating at elevated backpressure the engine becomes less efficient (i.e., fuel economy decreases) due to pumping losses. The present invention has shown that the use of MMT and other additives act catalytically to reduce the ignition temperature of the trapped material thereby leading to more frequent particulate trap regeneration and/or continuous regeneration (equilibrium), consequently, less time spent at elevated backpressure. This decrease in the amount of time spent at elevated backpressure can be related to an increase in engine fuel economy and power.

Additives used in engine oils can also improve the fuel economy of vehicles for the methods of the present invention. Various dispersants and viscosity index improvers can be used as additives in engine oils to achieve improved fuel economy in the finished oil. Thus, as examples and not as a limitation herein, engine oil additives such as HiTEC® 1910, HiTEC® 5770, and HiTEC® 5777 (available from Ethyl Corporation, Richmond, VA) contain components with functionality and structure sufficient to impart improved fuel economy.

Similarly, polyisobutylene-substituted succinimide prepared from maleic or succinic anhydride and polyisobutylene give fuel economy benefits because their high succinic anhydride / polyisobutylene ratio allows for reduced polymer loadings in a finished oil which helps on fuel economy. For example, Sequence VG engine testing has demonstrated that 4.5 wt% of HiTEC® 1921 can provide an equivalent performance to that achieved in an oil containing 6.0 wt% of HiTEC® 1919.

Alkenyl-substituted succinic anhydrides derived dispersants are well own. Such alkenyl-substituted succinic anhydrides are typically prepared by a thermal process (see, e.g., U.S. Pat. No. 3,361,673), or a mixed thermal/chlorination process (see, e.g., U.S. Pat. No. 3,172,892). The polyisobutenyl succinic anhydrides ("PIBSA") include monomeric adducts (see, e.g., U.S. Pat. Nos. 3,219,666; 3,381,022) and products adducted with at least 1.3 succinic groups per polyalkenyl-derived substituent (see, e.g., U.S. Pat. No. 4,234,435 to Meinhardt).

PIBSA serves as a ubiquitous precursor to several crankcase ashless dispersants, including succinimides, succinates, succinate esters amides, and triazoles (U.S. Pat. Nos. 3,272,746; 4,234,435; 3,219,666; 4,873,009; 4,908,145; and 5,080,815). In the formation of succinimides, the PIBSA is reacted with a polyamine to form a structurally complex mixture that may contain imide, amide, and imidazoline and diamide groups.

Mannich base dispersants represent another known class of crankcase dispersants (e.g. HiTEC® 7049 dispersant, available from Ethyl Corporation, of Richmond, Va.). These compounds are typically produced by reacting alkyl-substituted phenols with aldehydes and amines, such as is described in U.S. Pat. Nos. 3,539,633; 3,697,574; 3,704,308; 3,736,535; 3,736,357; 4,334,085; and 5,433,875;

Also known are functionalized olefin copolymers and their use as additives in fuel and lubricating oil compositions, as described in U.S. Pat. No. 6,107,258, which describes a crosslinked low molecular weight ethylene-propylene succinic anhydride dispersant. The functionalized olefin copolymers disclosed therein include an olefin copolymer on which has been grafted an ethylenically unsaturated carboxylic acid, or derivative thereof, to form an acylated olefin copolymer containing reactive carboxylic functionality. The acylated olefin copolymer is then reacted with a coupling compound, which contains more than one amine, thiol and/or hydroxy functionality capable of reacting with the carboxylic functionality of preferably more than one acylated olefin copolymer.

Engine oils, crankcase lubricants and motortrain lubricants can also be designed to include additive components and/or additive packages for achieving improved fuel economy of a vehicle. Thus, in an embodiment the present method claims can be obtained by incorporating into an engine oil lubricant an additive imparting friction reduction to the oil. Such additives can include but are not limited to, molybdenum compounds, amines, diamines, amides, imides, salts of carboxylic acids and salts of transition metals. Also useful herein as friction modifiers to impart fuel economy are esters, such as glycerol monooleate, modified amides such as diethanolamine cocoamide, aminoguanidine monooleate, glycerides and triglycerides. Commercially available friction modifiers include Ethomeen® T-12, ARMEEN, SUL-PERM, SAKURALUBE, and MOLYVAN.

In addition, certain friction modifiers in engine oil additive packages can assist in achieving fuel economy improvements. Included in these friction modifiers are the molybdenum components, including but not limited to molybdenum carboxylates, molybdenum carbamates, molybdenum thiocarbamates, molybdenum dithiocarbamates, molybdenum amides, molybdenum amines, oxymolybdenum compounds, molybdenum salts, molybdenum fatty acids, molybdenum esters, and any organo molybdate.

Thus, another embodiment herein provides a method for producing, transferring, and receiving a fuel economy credit as a result of improving the characteristic economy of an engine oil, by means of incorporating into the engine oil an engine oil additive, such as but not limited to a dispersant, a friction modifier, or a viscosity index modifier.

An example of an engine oil able to impart the fuel economy benefit for the method of the present invention includes, but is not limited to, a lubricating oil composition comprising: a) an oil of lubricating viscosity; and b) an oil-soluble molybdenum-containing compound, and optionally c) at least one succinimide or Mannich dispersant. (See SAE paper 982503, incorporated herein by reference.)

Specific examples of dispersants and/or viscosity improvers that provide fuel economy in an embodiment of the present invention for engine oils can include but are not limited to HiTEC® 1910, HiTEC® 5770, HiTEC® 5777, HiTEC® 1919, and HiTEC® 1921. More specifically, fuel economy improvements in vehicles have been observed as 1% to 2% by using in an engine oil a molybdenum friction modifier (such as Molyvan 855 or Molyvan 822).

Transmission fluids (including manual, automatic, and continuously variable) can also be formulated to include additive components or packages able to improve the fuel economy of a vehicle. These can include such materials as, but not limited to, amine, amide or ester friction modifiers. Commercial examples of these can include HiTEC® 2423, HiTEC® 2425, and HiTEC® 2426, available from Ethyl Corporation, Richmond, Virginia.

Particularly useful transmission fluid additives can include phosphorus-containing components and/or phosphorylated and boronated components used to improve the desired friction properties in a transmission or gear box of a vehicle. In some applications, friction reduction is the desired result, while in other applications, there is a need to achieve a specific friction level to optimize the engagement of the plates in a transmission. Therefore, additive components and additive packages are designed to produce these desired results and thereby achieve improved fuel economy in the vehicle. In this manner, the methods of the present invention can be achieved.

In a similar manner, another embodiment herein provides a method for producing, transferring, and receiving a fuel economy credit as a result of improving the! characteristic economy of a transmission lubricant, by means of incorporating into the transmission lubricant a transmission lubricant additive.

In a similar manner, another embodiment herein provides a method for producing, transferring, and receiving a fuel economy credit as a result of improving the characteristic economy of a gear lubricant, by means of incorporating into the gear lubricant a gear lubricant additive. Such gear lubricant additives can include but are not limited to the materials described herein as friction modifiers for engine oils.

In another embodiment, increased fuel economy in a vehicle is closely related to a reduction in greenhouse gases, such carbon dioxide. Increasing fuel economy reduces carbon dioxide generation, a greenhouse gas. Thus, a method for reducing carbon dioxide emissions is also a method for creating greenhouse gas emission reduction credits.

By the present invention, a first OEM can produce vehicles having improved fuel economy, derive or obtain a fuel economy credit for producing such vehicles, and then sell, trade or otherwise convey for value some or all of such fuel economy credit to a second OEM whose vehicles do not demonstrate a fuel economy comparable to the fuel economy of the vehicles from the first OEM.

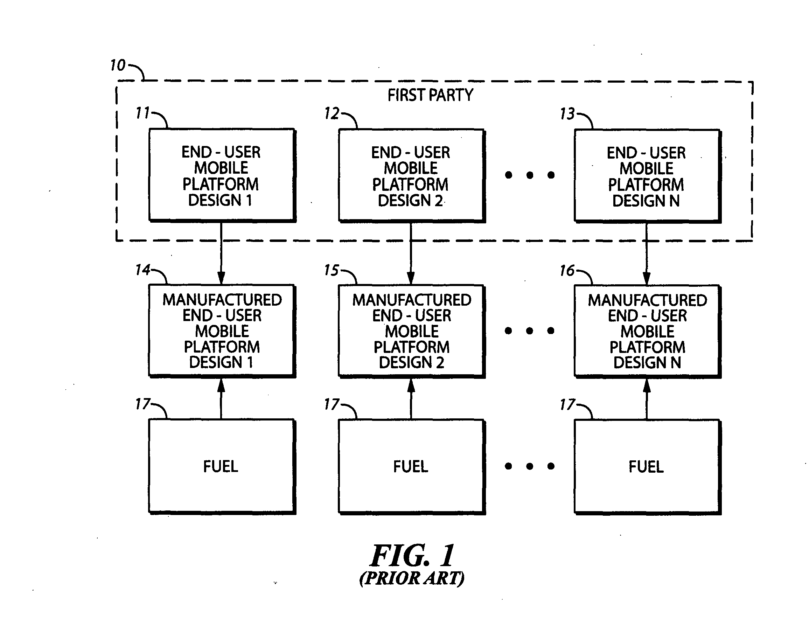

Referring now to FIG. 1 it may aid in understanding these present embodiments if one first better understands a relevant prior art paradigm. Pursuant to typical present day practice, a first party 10 (such as, for example, an automobile manufacturer) designs (or has designed) end-user mobile platforms (such as, for example, automobiles) and then manufactures (or has, wholly or partially, manufactured) those end-user mobile platforms. Not untypically, such a first party 10 will have a number of such end-user mobile platform designs (with at least three such designs 11, 12, and 13 being depicted for the purposes of illustrating this point) and will provide a corresponding plurality of manufactured end-user mobile platforms 14, 15, and 16. The latter will consume a fuel 17 during use by an end-user. Often, the different end-user mobile platforms will each have a different respective characteristic economy that corresponds to consumption of this fuel 17. As a result, at least one of the end-user mobile platform designs will typically have a less desirable characteristic economy than another of the end-user mobile platform designs.

It has been proposed that such a party 10 be held responsible for an overall average level of characteristic economy for all platforms as manufactured by that party over a given period of time (such as, for example, during a calendar year). For example, for an automobile manufacturer, one might impose a requirement that, on average, all of the automobiles of a given class of automobile as manufactured by that manufacturer must meet a minimum level of fuel consumption performance. Such a manufacturer can meet such a requirement by offering some automobiles that performance considerably better than this minimum level requirement to thereby offset those automobiles manufactured by this manufacturer that have a characteristic economy that is less than the minimum permitted level of performance. While possibly helpful to some extent, such a process arguably tends to be more punitive than inspirational. As a result, some measure of modest improvement can be expected with such known processes, but the overall results may still appear disappointing to many observers.

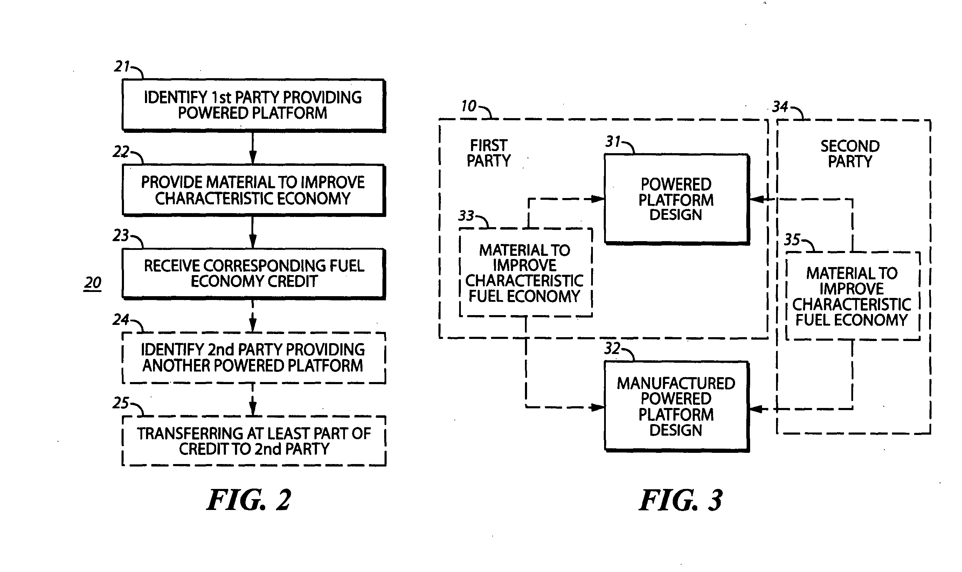

Pursuant to these various embodiments, and referring now to FIG. 2, an overall process 20 provides for initial identification 21 of a first party that provides a powered platform. For example, and referring momentarily to FIG. 3, this first party 10 will typically have a powered platform design 31 that corresponds to the manufacture of a given manufactured powered platform 32. (In general, such a party can typically be expected to have a plurality of such designs and manufactured platforms; only one is shown here for the sake of clarity and brevity.) This powered platform can comprise, for example, a stationary platform (a non-exhaustive listing of illustrative examples would include a power generation station, a combustion unit, an incinerator, a manufacturing plant, a construction site, a secondary power generation station, and so forth). As another example, the powered platform can comprise a mobile platform (a non-exhaustive listing of illustrative examples would include a terrestrial vehicle (such as but not limited to an automobile, a truck, a construction vehicle, a rail-guided vehicle, a motorcycle, a snowmobile, an all-terrain vehicle, a military vehicle, a rescue conveyance, and so forth), a water-borne vehicle, or an air-borne vehicle, to name a few).

As noted earlier, operation of this powered platform by an end user will require consumption of at least a first fuel. As also noted above, this powered platform will have a characteristic economy that corresponds to consumption of that first fuel. This characteristic economy can be represented by a metric as appropriate to suit the needs of a given application. As one example, an automobile may be measured with respect to the average number of miles that are reliably traversed for each gallon of consumed fuel. As another example, one might wish to specify the characteristic economy of a given platform with reference to an amount of heat output as may be derived per mass unit of fuel consumed (for example, British Thermal Units of heat output as derived per mass unit of fuel consumed can be used to metricize the characteristic economy of a given platform or class of platforms).

The defining characteristic economy itself can also be selected as desired to suit the needs of a given application. For example, the characteristic economy can correspond to average economy as may be observed under varied operating conditions for the powered platform. As another example, the characteristic economy can correspond to economy performance as observed under at least one controlled operating condition for the power mobile platform (for example, when loaded to a specific extent and for a specific duration of time). Illustrative examples of such a controlled operation condition include, but are not limited to:
- operation of a powered platform within a predetermined range of speed;
- operation of an engine for a powered platform within a predetermined range of speed;
- operation of a powered platform within a predetermined range of loading;
- operation of an engine for a powered platform within a predetermined range of loading;
- operation of a powered platform at a plurality of predetermined levels of performance; or
- operation of an engine for a powered platform at a plurality of predetermined levels of performance.

Referring again to FIG. 2, this process 20 then provides for provision 22 of a material to the first party that, when utilized during operation of the powered platform, improves the characteristic economy of the powered platform as corresponds to consumption of the first fuel. Referring momentarily again to FIG. 3, this material 33 can be provided from within the first party 10 (as when the first party self-sources the material in question) or this material 35 can be provided from external to the first party 10 (by, for example, a second party 34).

As noted above, this "material" can be any of a wide variety of potential substances and other tangible or physical content. As a general principle, virtually any addition (to the design of a powered platform, to the manufacture of a powered platform, or to the operation of a powered platform) that leads to the desired improvement is appropriate for consideration, including both materials now known and materials hereafter developed.

As one example, the material can comprise a motor train lubricant that serves, at least in part, to reduce loading on the powered platform and hence improve fuel consumption efficiency by that platform. Such lubricants include but are not limited to gear lubricants, gear lubricant additives, transmission fluid (for both manual and automatic transmissions), transmission fluid additive (again for both manual and automatic transmissions), engine/crankcase oil, engine/crankcase oil additives, and other similar liquids

As another example, the material can comprise an add-on component or other assembly that provides the sought-after incremental fuel economy improvement. Such components and assemblies can include but are not limited to improved platform performance sensors, platform performance controllers (including improved software-based controls and algorithms that effect such performance control), fuel treatment assemblies (for example, to filter, compress, atomize, pre-heat, or otherwise physically manipulate or alter the fuel prior to usage by the powered platform), friction-reducing mechanisms (for example, mechanisms that reduce friction between work surfaces such as improved tires for an automobile or the hull of a boat), and so forth.

As yet another example, the material can comprise an add-on platform that affects additional functionality which ultimately benefits the measure of characteristic economy. For example, an in-vehicle navigation system that reliably reduces the average distance that an average driver must drive a mobile powered platform might be appropriately considered a "material" within the scope of this process 20.

Returning again to FIG. 2, the process 20 next provides for receipt 23 of a corresponding fuel economy credit. That is, the fuel economy credit, and potentially its relative value and/or negotiable lifetime, preferably reflect, at least to some extent, the increased amount of fuel economy as can be reasonably ascribed to inclusion of the material with respect to the design, manufacture, and/or use of the powered platform.

This fuel economy credit may comprise a legally regulated fuel economy credit as may occur when the characteristic economy performance comprises a legally regulated metric of interest and a corresponding fuel economy credit has been legally mandated by some relevant sovereign entity (such as but not limited to a city (including municipalities of all sizes and types including both incorporated and unincorporated municipalities), a county, a state or province, or a nation, as well as related governmental entities such regional, multi-national, or other international bodies such as the United Nations or the European Union). The fuel economy credit may also comprise a voluntarily administered fuel economy credit (as may occur, for example, when a given characteristic economy level of performance or other relevant context (such as a given class of powered platforms) comprises a voluntarily regulated metric of interest).

Such fuel economy credits can be relatively virtual, as where a record of issued credits and their history of usage, depletion, and transfer is centrally maintained in, for example, a database. Or, if desired, such fuel economy credits can be represented in some fashion by negotiable documentation (such as a printed credit award that is literally held until provided to a corresponding authority as "payment" due for engendering accountable powered platforms). In any event, it should be expressly understood that the expression "fuel economy credit" as used herein is intended to include all related concepts, including but not limited to offsets, credits, and allowances as are often used in so-called cap-and-trade programs, and further to include credits that are usable upon receipt, credits bearing a first-allowed-year-for-usage restriction, credits bearing a use-it-or-lose-it term limitation, bankable credits that do not expire prior to use, and so forth.

Depending upon the needs and context of a given application, this fuel economy credit may be received directly or indirectly from a regulatory agency or an administrative entity as appropriate (for example, the United States Environmental Protection Agency's allowance tracking system for their acid rain division tracks initial allotments of allowances to specific parties and further provides the mechanism whereby a trade of such allowances as between two parties can further be memorialized). For example, the party that sources the material may receive the fuel economy credit substantially directly from an administrative entity or regulatory body that administers voluntary or mandatory compliance with a fuel economy credit program. In the alternative, and again depending upon the needs and context of a given application, the fuel economy credit may be received from another party, which another party received the fuel economy credit from such an administrative entity or regulatory body.

So configured, the fuel economy credit can ultimately inure to the benefit of a party that makes the initial allocation of resources sufficient to permit the sourcing of the material that results in an overall improvement in the characteristic fuel consumption economy for a given powered platform, notwithstanding that the fuel economy reduction may occur in a potentially widely distributed fashion over a plurality of end-user mobile platforms.

. To illustrate further the flexibility of such an approach, and referring still to FIG. 2, the process 20 can also optionally include identifying 24 a second party that provides a second . powered platform (which may be identical to, or different than, the first powered platform) wherein operation of the second powered mobile platform requires consumption of at least a second fuel (which may be substantially identical to, or dissimilar to, the first fuel noted earlier) and wherein the second powered platform has a characteristic economy that corresponds to consumption of the second fuel. A portion (or all) of the earlier received fuel economy credit is then transferred 25 to this second party.

In a preferred approach, this transferred credit can serve as an offset to the second party's characteristic economy as corresponds to consumption of the second fuel by the second powered platform. For example, this second party can transfer something of value (such as, but not limited to, a substantially liquid monetary instrument, a commitment with respect to a present or future business opportunity, a legal grant regarding an intellectual property right, and/or access to purchasers of a given market, to name a few) to the first party in exchange for these fuel economy credits and then use those credits to render itself compliant with voluntary or regulatory requirements or guidelines as may pertain to fuel consumption by its second cowered platform.

To further exemplify the breadth of these teachings, the following supplemental examples are provided.

### EXAMPLE 1: Automobile manufacturer and recreational vehicle manufacturer

An automobile manufacturer manufactures a line of automobiles that are subject to a relevant fuel consumption regulatory requirement. A third party develops and manufactures a motor train lubricant additive that improves characteristic fuel consumption for such automobiles by 2%. This third party provides this motor train lubricant additive to the automobile manufacturer and receives the fuel economy credits as correspond to the resultant fuel usage improvement. The third party then sells these credits to a recreational vehicle manufacturer whose present line of recreational vehicles is currently deficient with respect to a fuel consumption regulatory requirement as applies to such vehicles. The latter then uses those credits to offset this circumstance.

The above-described embodiments clearly provide an inducement to improve upon the status quo as suggested by this example. The third party has an increased motivation to develop the new motor train lubricant additive due to the opportunity to receive and then sell the corresponding fuel economy credits. In a similar fashion, over the long run, one may expect similar fuel economy improvements to be developed to benefit the recreational vehicle manufacturer, as the latter can be expected to eventually be willing to expend the resources necessary to acquire and utilize such technology as versus paying for third party credits to offset their own deficiencies.

### EXAMPLE 2: Generator manufacturer and automobile manufacturer

A generator manufacturer manufactures a large coal burning generator used by the electric utility industry that is subject to a relevant fuel consumption requirement. That manufacturer develops and incorporates into its generator design a new high efficiency magnet material that improves characteristic coal consumption for this generator by 6% and receives a corresponding fuel economy credit. This manufacturer also provides this improvement to other generator manufacturers and receives the fuel economy credits as correspond to the resultant fuel usage improvement experienced by these third parties. This manufacturer then sells a portion of these fuel economy credits to an automobile manufacturer whose present line of vehicles is currently deficient with respect to a fuel consumption requirement as applies to such vehicles. The latter then uses those credits to offset this present circumstance.

This illustration clearly suggests the impact of providing fuel economy credits across a broad spectrum of power platforms and then permitting a trade (or even a secondary market) with respect to such fuel economy credits. In particular, powerful inducements would exist to prompt the generator manufacturer to first develop the noted improvement and to then share that development with others (including even competitors).

Those skilled in the art will recognize that a wide variety of modifications, alterations, and combinations can be made with respect to the above described embodiments without departing from the spirit and scope of the invention, and that such modifications, alterations, and combinations are to be viewed as being within the ambit of the inventive concept.

### Preferred Embodiments:

The present invention relates to a method comprising:
- identifying a first party that provides a powered mobile platform wherein powered movement of the powered mobile platform requires consumption of at least a first fuel, wherein the powered mobile platform has a characteristic economy that corresponds to consumption of the first fuel;
- providing to the first party a material that, when utilized during powered movement of the powered mobile platform, improves the characteristic economy of the powered mobile platform as corresponds to consumption of the first fuel; and
- receiving a fuel economy credit as a result of improving the characteristic economy due to the material.

In a preferred embodiment of this method, the material comprises a motor train lubricant.

In a preferred embodiment of this method, the material comprises a motor train lubricant additive.

In a preferred embodiment of this method, the material comprises a gear lubricant additive.

In a preferred embodiment of this method, the material comprises a gear lubricant.

In a preferred embodiment of this method, the material comprises a transmission fluid additive.

In a further preferred embodiment the transmission fluid additive comprises a manual transmission fluid additive.

In a further preferred embodiment the transmission fluid additive comprises an automatic transmission fluid additive.

In a preferred embodiment of this method, the material comprises a transmission fluid.

In a further preferred embodiment the transmission fluid comprises a manual transmission fluid.

In a further preferred embodiment the transmission fluid comprises an automatic transmission fluid.

In a preferred embodiment of this method, the material comprises an engine oil additive, an engine oil, a crankcase oil additive, a crankcase oil or a liquid.

In a further preferred embodiment, the liquid comprises a substance that reduces loading on the powered mobile platform.

In a preferred embodiment of this method, it further comprises:
- identifying a second party that provides a second powered mobile platform wherein powered movement of the second powered mobile platform requires consumption of at least a second fuel, wherein the second powered mobile platform has a characteristic economy that corresponds to consumption of the second fuel;
- transferring to the second party at least part of the fuel economy credit, which fuel economy credit serves as an offset to the second party's characteristic economy that corresponds to consumption of the second fuel by the second powered mobile platform.

In a preferred embodiment the aforementioned second fuel is substantially identical to the first fuel or the second fuel is substantially dissimilar to the first fuel.

Ina preferred embodiment, transferring to the second party at least part of the fuel economy credit includes transferring to the second party at least part of the fuel economy credit in exchange for something of value.

In a preferred embodiment, transferring to the second party at least part of the fuel economy credit in exchange for something of value comprises transferring to the second party at least part of the fuel economy credit in exchange for at least one of:
- a substantially liquid monetary instrument;
- commitment of at least one of present and future business opportunity;
- a legal grant regarding an intellectual property right;
- access to purchasers of a given market.

In a preferred embodiment, the fuel economy credit comprises a regulated fuel economy credit. In a preferred embodiment, the regulated fuel economy credit comprises a fuel economy credit that is regulated by at least one of a city, county, state, provincial, national, regional, multi-national, and international sovereign entity.

In a preferred embodiment, the characteristic economy comprises a voluntarily regulated metric of interest.

In a preferred embodiment, the fuel economy credit comprises a voluntarily-administered fuel economy credit.

In a preferred embodiment, receiving a fuel economy credit includes receiving the fuel economy credit substantially directly from a regulatory agency or directly from an administrative entity.

In a preferred embodiment, receiving the fuel economy credit substantially directly from an administrative entity includes receiving the fuel economy credit substantially directly from an administrative entity that administers voluntary compliance with a characteristic economy improvement credit program.

In a preferred embodiment, providing to the first party a material that, when utilized during powered movement of the powered mobile platform, improves the characteristic economy of the powered mobile platform as corresponds to consumption of the first fuel comprises the first party providing the material to itself.

In a preferred embodiment, providing to the first party a material that, when utilized during powered movement of the powered mobile platform, improves the characteristic economy of the powered mobile platform as corresponds to consumption of the first fuel comprises another party providing the material to the first party.

In a preferred embodiment, receiving fuel economy credit includes the another party receiving the fuel economy credit.

In a preferred embodiment, the characteristic economy corresponds to average economy under varied operating conditions for the powered mobile platform.

In a preferred embodiment, the characteristic economy corresponds to economy under at least one controlled operating condition for the powered mobile platform.

In a preferred embodiment, the at least one controlled operating condition comprises at least one of:
- operation of the powered mobile platform within a predetermined range of speed;
- operation of an engine for the powered mobile platform within a predetermined range of speed;
- operation of the powered mobile platform within.a predetermined range of loading;
- operation of an engine for the powered mobile platform within a predetermined range of loading;
- operation of the powered mobile platform at a plurality of predetermined levels of performance;
- operation of an engine for the powered mobile platform at a plurality of predetermined levels of performance.

In a preferred embodiment, the powered mobile platform comprises at least one of:
- an automobile;
- a truck;
- a construction vehicle;
- a recreational vehicle;
- a marine vehicle;
- an aircraft.

In a preferred embodiment, the characteristic economy that corresponds to consumption of the first fuel corresponds to heat output as derived per mass unit of fuel consumed.

In a preferred embodiment, the characteristic economy further corresponds to British Thermal Units of heat output as derived per mass unit of fuel consumed.

In a preferred embodiment, the characteristic economy corresponds to miles per gallon of fuel consumed.

The present invention further relates to a method comprising:
- identifying a first party that provides a powered platform wherein operation of the powered platform requires consumption of at least a first fuel, wherein the powered platform has a characteristic economy that corresponds to consumption of the first fuel;
- providing to the first party a material that, when utilized during operation of the powered platform, improves the characteristic economy of the powered platform as corresponds to consumption of the first fuel; and
- receiving a fuel economy credit as a result of improving the characteristic economy due to the material.

In a preferred embodiment of this method, the powered platform comprises a mobile platform. In a preferred embodiment of this method, the mobile platform comprises one of:
- a terrestrial vehicle;
- a water-borne vehicle;
- an air-borne vehicle.

In a preferred embodiment, the mobile platform comprises one of:
- an automobile;
- a truck;
- a construction vehicle;
- a rail-guided vehicle;
- a motorcycle;
- a snowmobile;
- an all-terrain vehicle;
- a military vehicle;
- a rescue conveyance.

In a preferred embodiment, the powered platform comprises a stationary platform, which preferably comprises one of:
- a power generation station;
- a combustion unit;
- an incinerator;
- a manufacturing plant;
- a construction site;
- a secondary power generation station.

## Claims

1. A method of improving the characteristic economy of a powered mobile platform as corresponds to consumption of a first fuel by adding a material that, when utilized during powered movement of the powered mobile platform improves the characteristic economy thereof.

2. The method of claim 1 comprising:
- identifying a first party that provides a powered mobile platform wherein powered movement of the powered mobile platform requires consumption of at least a first fuel, wherein the powered mobile platform has a characteristic economy that corresponds to consumption of the first fuel;
- providing to the first party a material that, when utilized during powered movement of the powered mobile platform, improves the characteristic economy of the powered mobile platform as corresponds to consumption of the first fuel; and
- receiving a fuel economy credit as a result of improving the characteristic economy due to the material.

3. The method of claim 1 or 2 wherein the material comprises a motor train lubricant, a motor train lubricant additive, a gear lubricant additive, a gear lubricant, a transmission fluid additive, a transmission fluid, an engine oil additive, an engine oil, a crankcase oil additive, a crankcase oil, or a liquid.

4. The method of claim 3 wherein the transmission fluid additive comprises a manual transmission fluid additive.

5. The method of claim 3 wherein the transmission fluid additive comprises an automatic transmission fluid additive.

6. The method of claim 3 wherein the transmission fluid comprises a manual transmission fluid.

7. The method of claim 3 wherein the transmission fluid comprises an automatic transmission fluid.

8. The method of claim 3 wherein the liquid comprises a substance that reduces loading on the powered mobile platform.

9. The method of claim 2 and further comprising:
- identifying a second party that provides a second powered mobile platform wherein powered movement of the second powered mobile platform requires consumption of at least a second fuel, wherein the second powered mobile platform has a characteristic economy that corresponds to consumption of the second fuel;
- transferring to the second party at least part of the fuel economy credit, which fuel economy credit serves as an offset to the second party's characteristic economy that corresponds to consumption of the second fuel by the second powered mobile platform.

10. The method of claim 9 wherein the second fuel is substantially identical to the first fuel.

11. The method of claim 9 wherein the second fuel is substantially dissimilar to the first fuel.

12. The method of claim 9 wherein transferring to the second party at least part of the fuel economy credit includes transferring to the second party at least part of the fuel economy credit in exchange for something of value.

13. The method of claim 12 wherein transferring to the second party at least part of the fuel economy credit in exchange for something of value comprises transferring to the second party at least part of the fuel economy credit in exchange for at least one of:
- a substantially liquid monetary instrument;
- commitment of at least one of present and future business opportunity;
- a legal grant regarding an intellectual property right;
- access to purchasers of a given market.

14. The method of claim 13 wherein the fuel economy credit comprises a regtulated fuel economy credit.

15. The method of claim 14 wherein the regulated fuel economy credit comprises a fuel economy credit that is regulated by at least one of a city, county, state, provincial, national, regional, multi-national, and international sovereign entity.

16. The method of claim 2 wherein the characteristic economy comprises a voluntarily regulated metric of interest.

17. The method of claim 16 wherein the fuel economy credit comprises a voluntarily-administered fuel economy credit.

18. The method of claim 2 wherein receiving a fuel economy credit includes receiving the fuel economy credit substantially directly from a regulatory agency.

19. The method of claim 2 wherein receiving a fuel economy credit includes receiving the fuel economy credit substantially directly from an administrative entity.

20. The method of claim 19 wherein receiving the fuel economy credit substantially directly from an administrative entity includes receiving the fuel economy credit substantially directly from an administrative entity that administers voluntary compliance with a characteristic economy improvement credit program.

21. The method of claim 2 wherein providing to the first party a material that, when utilized during powered movement of the powered mobile platform, improves the characteristic economy of the powered mobile platform as corresponds to consumption of the first fuel comprises the first party providing the material to itself.

22. The method of claim 2 wherein providing to the first party a material that, when utilized during powered movement of the powered mobile platform, improves the characteristic economy of the powered mobile platform as corresponds to consumption of the first fuel comprises another party providing the material to the first party.

23. The method of claim 22 wherein receiving fuel economy credit includes the another party receiving the fuel economy credit.

24. The method of claim 1 or 2 wherein the characteristic economy corresponds to average economy under varied operating conditions for the powered mobile platform

25. The method of claim 1 or 2 wherein the characteristic economy corresponds to economy under at least one controlled operating condition for the powered mobile platform.

26. The method of claim 25 wherein the at least one controlled operating condition comprises at least one of:
- operation of the powered mobile platform within a predetermined range of speed;
- operation of an engine for the powered mobile platform within a predetermined range of speed;
- operation of the powered mobile platform within a predetermined range of oading;
- operation of an engine for the powered mobile platform within a predetermined range of loading;
- operation of the powered mobile platform at a plurality of predetermined leyels of performance;
- operation of an engine for the powered mobile platform at a plurality of predetermined levels of performance.

27. The method of claim 1 or 2 wherein the powered mobile platform comprises at least one of:
- an automobile;
- a truck;
- a construction vehicle;
- a recreational vehicle;
- a marine vehicle;
- an aircraft.

28. The method of claim 1 or 2 wherein the characteristic economy that corresponds to consumption of the first fuel corresponds to heat output as derived per mass unit of fuel consumed.

29. The method of claim 28 wherein the characteristic economy further corresponds to British Thermal Units of heat output as derived per mass unit of fuel consumed.

30. The method of claim 28 wherein the characteristic economy corresponds to miles per gallon of fuel consumed.

31. A method comprising:
- identifying a first party that provides a powered platform wherein operation of the powered platform requires consumption of at least a first fuel, wherein the powered platform has a characteristic economy that corresponds to consumption of the first fuel;
- providing to the first party a material that, when utilized during operation of the powered platform, improves the characteristic economy of the powered platform as corresponds to consumption of the first fuel; and
- receiving a fuel economy credit as a result of improving the characteristic economy due to the material.

32. The method of claim 31 wherein the powered platform comprises a mobile platform.

33. The method of claim 31 wherein the mobile platform comprises one of:
- a terrestrial vehicle;
- a water-borne vehicle;
- an air-borne vehicle.

34. The method of claim 32 wherein the mobile platform comprises one of:
- an automobile;
- a truck;
- a construction vehicle;
- a rail-guided vehicle;
- a motorcycle;
- a snowmobile;
- an all-terrain vehicle;
- a military vehicle;
- a rescue conveyance.

35. The method of claim 31 wherein the powered platform comprises a stationary platform.

36. The method of claim 35 wherein the stationary platform comprises one of:
- a power generation station;
- a combustion unit;
- an incinerator;
- a manufacturing plant;
- a construction site;
- a secondary power generation station.
